# EUROPEAN PATENT SPECIFICATION

(11) **EP 3 955 523 B1**
(45) Date of publication and mention of the grant of the patent: **27.05.2026**
(21) Application number: 20190544.5
(22) Date of filing: 11.08.2020
(51) Int. Cl.: H04L 41/5041, H04L 41/142, H04L 41/40, H04L 41/50

(54) **NETWORK ANALYSIS COMPONENT AND METHOD FOR PROVIDING NETWORK ANALYSIS AND/OR PREDICTION INFORMATION ABOUT NETWORK SLICE INSTANCES OF A MOBILE COMMUNICATION NETWORK**
NETZWERKANALYSEKOMPONENTE UND VERFAHREN ZUR BEREITSTELLUNG VON NETZWERKANALYSE- UND/ODER -VORHERSAGEINFORMATIONEN ÜBER NETZWERKSCHICHTINSTANZEN EINES MOBILKOMMUNIKATIONSNETZWERKS
COMPOSANT D'ANALYSE DE RÉSEAU ET PROCÉDÉ POUR LA FOURNITURE D'UNE ANALYSE DE RÉSEAU ET/OU D'INFORMATIONS DE PRÉDICTION CONCERNANT DES INSTANCES DE TRANCHE D'UN RÉSEAU DE COMMUNICATION MOBILE

(43) Date of publication of application: 16.02.2022
(73) Proprietor: NTT DOCOMO, INC., Chiyoda-ku Tokyo 100-6150 (JP)
(72) Inventor: SAMA, Malla Reddy, 80687 Munich (DE); AOYAGI, Kenichiro, Tokyo, 100-6150 (JP)
(74) Representative: Viering, Jentschura & Partner mbB Patent- und Rechtsanwälte

(56) References cited:
- WO-A1-2020/033424
- "3rd Generation Partnership Project; Technical Specification Group Services and System Aspects; System architecture for the 5G System (5GS); Stage 2 (Release 16)", 3 August 2020 (2020-08-03), XP052297826, Retrieved from the Internet <URL:https://ftp.3gpp.org/3guInternal/3GPP_ultimate_versions_to_be_transposed/sentToDpc/23501-g51.zip 23501-g51.docx> [retrieved on 20200803]
- "3rd Generation Partnership Project; Technical Specification Group Services and System Aspects; Architecture enhancements for 5G System (5GS) to support network data analytics services (Release 16)", 26 June 2020 (2020-06-26), XP051935314, Retrieved from the Internet <URL:https://ftp.3gpp.org/tsg_sa/WG2_Arch/Latest_SA2_Specs/DRAFT_INTERIM/Archive/23288-g40_CRs_Implemented.zip 23288-g40_CRs_Implemented.docx> [retrieved on 20200626]
- "3rd Generation Partnership Project; Technical Specification Group Core Network and Terminals; 5G System; Network Data Analytics Services; Stage 3 (Release 16)", vol. CT WG3, no. V16.4.0, 10 July 2020 (2020-07-10), pages 1 - 91, XP051924731, Retrieved from the Internet <URL:ftp://ftp.3gpp.org/Specs/archive/29_series/29.520/29520-g40.zip 29520-g40.doc> [retrieved on 20200710]
- HUAWEI: "Supported headers, Resource Data type, Operation Name and yaml mapping", vol. CT WG3, no. E-Meeting; 20200602 - 20200611, 19 June 2020 (2020-06-19), XP051900908, Retrieved from the Internet <URL:https://ftp.3gpp.org/3guInternal/3GPP_Ultimate_CRPacks/CP-201244.zip 29520_CR0192r1_(Rel-16)_C3-203452 was 3379_r3 SBIProtoc16 CR 29.520 Supported headers, Resource Data type and yaml mapping.docx> [retrieved on 20200619]

## Description

The present disclosure relates to network analysis components and methods for providing network analysis and/or prediction information about network slice instances of a mobile communication network.

In a communication network such as a 5G mobile communication network it is important to ensure that a certain service quality can be maintained. For this, network analysis and prediction information which may be generated from information like load, resource usage, available components, state of components etc. may be monitored to be able to take measures, e.g. when overload is imminent, to avoid a drop of service quality, etc. In a communication network having a network slice architecture, like a 5G mobile communication system, this relates in particular to monitoring of network analysis and prediction information for individual network slice instances since, for example, individual network slice instances may become overloaded. Accordingly, efficient and reliable approaches to provide network analysis and/or prediction information for network slice instances are desirable.

"3rd Generation Partnership Project; Technical Specification Group Services and System Aspects; Architecture enhancements for 5G System (5GS) to support network data analytics services (Release 16)", 3GPP DRAFT; 23288-G40_CRS_IMPLEMENTED, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE 26 June 2020 (2020-06-26), XP051935314, discloses in section "6.3 Slice load level related network data analytics " in particular "Sec. 6.3.1 General" that the NWDAF provides slice load level information to an NF on a Network Slice instance level; and further in Sec. 6.2 3 "Data Collection from OAM" in particular in Sec. "6.2.3.1 General" that the NWDAF may collect from the OAM "NG RAN or 5GC performance measurements as defined in TS 28.552 [8]", i.e. "3GPP TS 28.552: Management and orchestration, 5G performance measurements" and further "5G End to end KPIs as defined in TS 28.554 [10]", i.e. "3GPP TS 28.554: Management and orchestration, 5G end to end Key Performance Indicators (KPI)".

WO 2020/033424 A1 discloses a system which includes a management data analytics service. A management data analytics service, MDAS, provides NSSI related data analytics, an MDAS for an NSI provides NSI related data analytics.

### Summary of the Invention

According to an aspect of the present invention, a network analysis component of a mobile communication network for providing network analysis and/or prediction information about network slice instances of the mobile communication network according to claim 1 is provided .Additional features for advantageous embodiments of the present invention are provided in the dependent claims.

According to another aspect of the present invention, a method for providing network analysis and/or prediction information about network slice instances of a mobile communication network according to claim 5 is provided. According to a further aspect of the present invention a computer program and a readable medium are provided in claim 6.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system configured according to 5G (Fifth Generation) as specified by 3GPP (Third Generation Partnership Project).
- Figure 2: shows a network slice.
- Figure 3: shows, as an informative example useful for understanding the invention but not being part of the invention, a message flow diagram for obtaining slice information using a subscription approach.
- Figure 4: shows, as an embodiment of the invention, a message flow diagram for obtaining slice information using an on-demand approach.
- Figure 5: shows a message flow diagram for obtaining information for analysis of the state of a network slice instance.
- Figure 6: shows a network analysis component of a mobile communication network for providing network analysis and/or prediction information about network slice instances of the mobile communication network.
- Figure 7: shows, as an informative example useful for understanding the invention but being not part of the invention, a flow diagram illustrating a method for providing network analysis and/or prediction information about network slice instances of a mobile communication network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

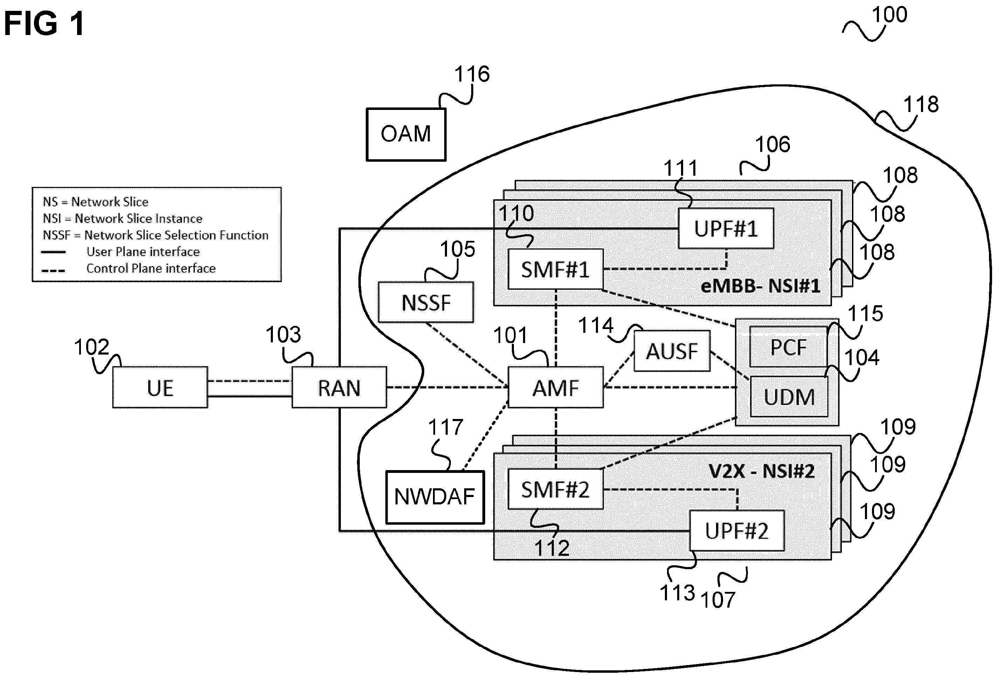

Figure 1 shows a radio communication system 100, for example configured according to 5G (Fifth Generation) as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile communication network side, i.e. part of a mobile communication network (e.g. a Public Land Mobile Network PLMN).

Furthermore, the radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network (5GC) 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple core network slices 106, 107 and for each core network slice 106, 107, the operator (also referred to MNO for Mobile Network Operator) may create multiple core network slice instances 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

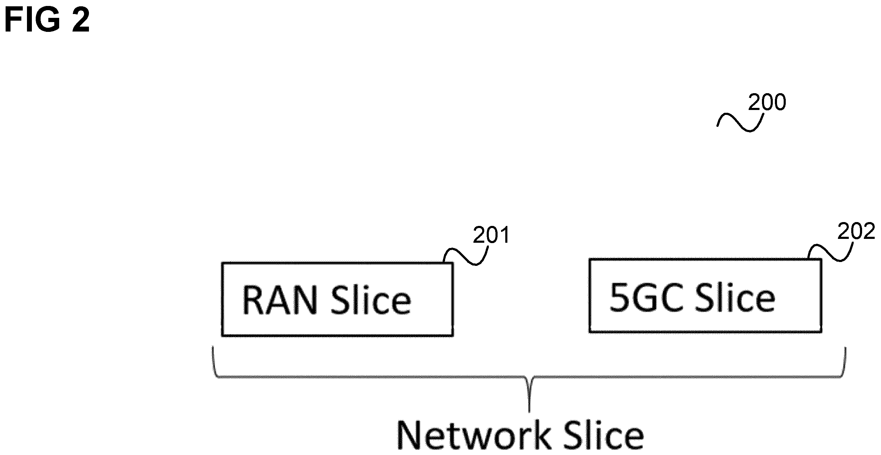

Like the core network 118, the RAN 103 may also be sliced, i.e. include multiple RAN slices. A RAN slice and a core network slice 106, 107 may be grouped to form a network slice as illustrated in figure 2.

Figure 2 shows a network slice 200.

A network slice 200 can be seen as a logical network that provides specific network capabilities and network characteristics.

The network slice 200 includes a RAN slice 201 and a core network (e.g. 5GC) slice 202.

An instance of a network slice 200, i.e. a network slice instance which includes a RAN slice instance and a core network slice instance, is defined within a PLMN and includes Core Network Control Plane and User Plane Network Functions, RAN components (e.g. NG-RAN components), in particular base stations. In case of roaming these components may at least partially be of a visited PLMN (VPLMN).

An S-NSSAI (Single Network Slice Selection Assistance information) identifies a network slice and is included of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

A network slice instance is identified by an NSI (also referred to as NSI ID).

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The radio communication system 100 may further include an OAM (Operation, Administration and Maintenance) function (or entity) 116, e.g. implemented by one or more OAM servers which is connected to the RAN 103 and the core network 118 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

The core network 118 may further include a Network Data Analytics Function (NWDAF) 117. The NWDAF is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. The NWDAF 117 may have an interface to various network functions on the mobile communication network side, e.g. to the AMF 101, the SMFs 110, 112 and the PCF 115. For simplicity, only the interface between the NWDAF 117 and the AMF 101 is depicted.

For example, NWDAF analytics should allow monitoring the number of UEs registered in a network slice instance and their Observed Service Experience. In addition to OAM performing SLA (service level agreement) assurance, 5GC NFs may take actions based on NWDAF slice QoE analytics to prevent further service experience degradation in the network slice instance.

The NSSF 105 or AMF 101 may for example determine when a load distribution decision is required to address an issue identified by processing the analytics result (i.e. network analysis and/or prediction information) provided by the NWDAF 117. For example, when a network slice instance is detected or forecast to experience service experience degradation, new UE registrations or PDU sessions may not be assigned to that network slice instance anymore by triggering a network slice load distribution mechanism. The NSSF 105, AMF 101 and/or OAM 116, for example, may also simultaneously subscribe to both slice service experience and slice load analytics from the NWDAF 117. One or multiple subscriptions to one or multiple S-NSSAI(s) and NSI(s) are possible.

The NWDAF 117 provides slice load level information to an NF on a Network slice instance level. The NWDAF notifies slice specific network status analytics information (also referred to as network analysis and/or prediction information) to the NFs that are subscribed to it. For example, as network analysis and/or prediction information, the NWDAF 117 reports when the load level of the Network slice instance, indicated by the S-NSSAI and the associated NSI (if applicable) in the Analytics Filter, crosses the threshold provided in the analytics subscription; if no threshold is provided in the subscription, the reporting (Notify operation) is assumed to be periodic.

To generate the network analysis and/or prediction information, NWDAF 117 collects input data required (e.g. to derive slice service experience analytics), i.e. information for analysis of the state of the network slice instance. This may in particular include slice load information for a network slice instance, so the NWDAF needs to determine the load of the network slice instance.

Table 1 gives examples of the data collected by the NWDAF 117 for generating NF analysis information (i.e. NF load analytics), i.e. examples for information obtained by the NWDAF 117 for analysis of the state of the network slice instance.

The network analysis and/or prediction information which results from the analysis of the state of the network slice instance may include NF load predictions and NF load statistics.

**Table 1**

| Information | Source | Description |
|---|---|---|
| NF load | NRF | The load of specific NF instance(s) in their NF profile. |
| NF status | NRF | The status of a specific NF instance(s) (registered, suspended, undiscoverable). |
| NF resource usage | OAM | The usage of assigned virtual resources currently in use for specific NF instance(s) (mean usage of virtual CPU, memory, disk) |
| NF resource configuration | OAM | The life cycle changes of specific NF resources (e.g., NF operational or interrupted during virtual/physical resources reconfiguration) |

Table 2 gives examples of NF load predictions and table 3 gives examples of NF load statistics.

**Table 2**

| Information | Description |
|---|---|
| List of resource status (1..max) | List of observed load information for each NF instance along with the corresponding NF id / NF Set ID (as applicable) |
| > NF type | Type of the NF instance |
| > NF instance ID | Identification of the NF instance |
| > NF status | The availability status of the NF on the Analytics target period, expressed as a percentage of time per status value (registered, suspended, undiscoverable) |
| > NF resource usage | The average usage of assigned resources (CPU, memory, disk) |
| > NF load | The average load of the NF instance over the Analytics target period |
| > NF peak load (optional) | The maximum load of the NF instance over the Analytics target period |

**Table 3**

| Information | Description |
|---|---|
| List of resource status (1..max) | List of observed load information for each NF instance along with the corresponding NF id / NF Set ID (as applicable) |
| > NF type | Type of the NF instance |
| > NF instance ID | Identification of the NF instance |
| > NF status | The availability status of the NF on the Analytics target period, expressed as a percentage of time per status value (registered, suspended, undiscoverable) |
| > NF resource usage | The average usage of assigned resources (CPU, memory, disk) |
| > NF load | The average load of the NF instance over the Analytics target period |
| > NF peak load (optional) | The maximum load of the NF instance over the Analytics target period |

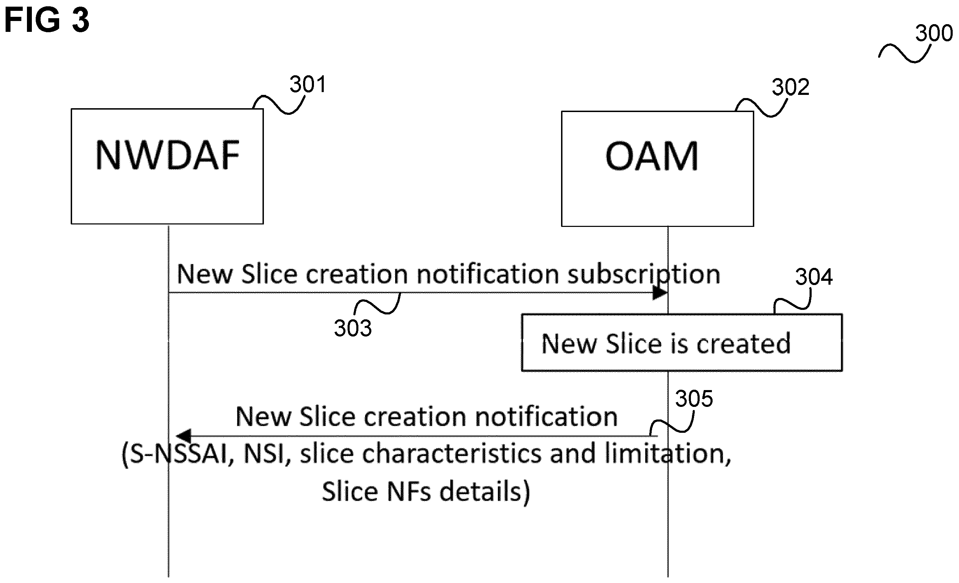

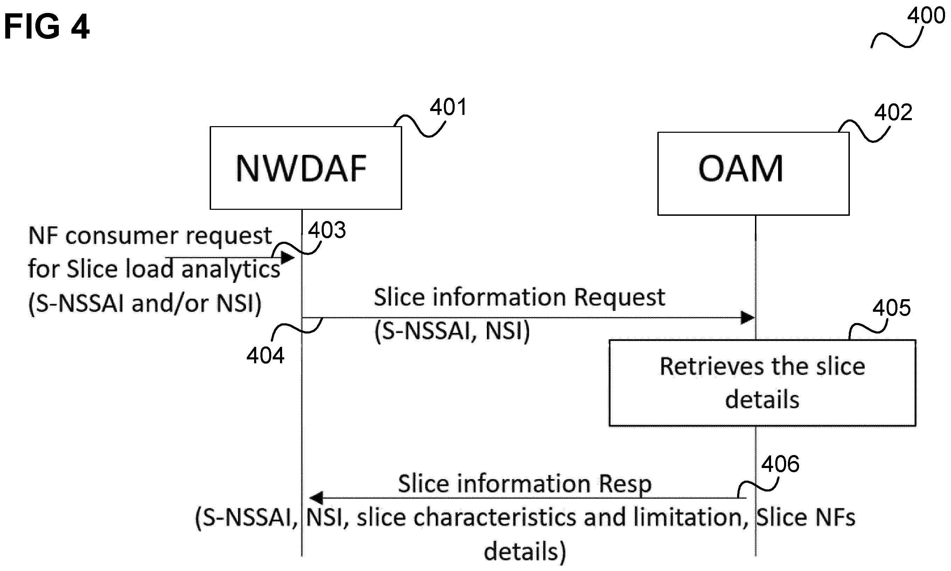

In order to determine information for analysis of the state of the network slice instance, network slice instance load in the present example, the NWDAF 117 first obtains slice information, in particular information about which communication network components are part of the network slice instance, e.g. obtains a list of NFs associated to the network slice instance. Two options for this are described in the following with reference to figures 3 and 4.

Figure 3 shows, as an informative example useful for understanding the invention, but not being part of the invention, a message flow diagram 300 for obtaining slice information using a subscription approach.

The message flow takes place between an NWDAF 301, e.g. corresponding to NWDAF 117, and a slice management information storage component 302, i.e. a component storing slice management information. In the present example, the slice management information storage component 302 is an OAM 302, e.g. corresponding to OAM 116, but it may for example also be an NRF or an NSSF or an UDM or a PCF.

In 303, the NWDAF 301 subscribes with the OAM for new slice creation notification i.e. for notification of slice information for a network slice instance that is newly created in the mobile communication network (to which NWDAF and OAM belong).

If a new network slice instance is created (e.g. configured) in the network (e.g. by the OAM 302), the OAM 302 notifies the NWDAF with created slice information in 305, e.g. allocated Slice ID or NSI, associated NF list, slice characteristics and limitations, and other slice SLA information.

Similarly, the NWDAF 301 may subscribe to be notified in case of any changes to a network slice instance (e.g. in terms of the network slice instance's network functions). In response to such a subscription, for example, the OAM 302 can send an update notification to the NWDAF 301 if there are changes in the slice configuration of the network slice e.g. if a new NF is added and/or removed from the network slice or there are any changes in the slice characteristics and limitations or changes in the slice SLA.

For this update notification, the NWDAF 301 can directly (explicitly) subscribe with the storage component (e.g. OAM 302) to be notified about any changes or implicitly subscription during slice information gathering from the OAM 302 such that the OAM 302 knows that it has to notify NWDAF if changes to the network slice instance are made.

Figure 4 shows, in accordance with an embodiment of the invention, a message flow diagram 400 for obtaining slice information using an on-demand approach.

The message flow takes place between an NWDAF 401, e.g. corresponding to NWDAF 117, and a slice management information storage component 402, i.e. a component storing slice management information. In the present example, the slice management information storage component 402 is an OAM 402, e.g. corresponding to OAM 116, but it may for example also be an NRF or an NSSF or an UDM or a PCF.

In reaction to any network analysis and/or prediction information consumer (i.e. a requesting entity, e.g. a network function) asking for network analysis and/or prediction information of a network slice instance, e.g. by means of a slice load or slice experience analytics request sent to the NWDAF 401 in 403, the NWDAF 401 checks whether it has the necessary slice information it requires for generating the network analysis and/or prediction information. If it does not have the slice information, the NWDAF 401 in 404 explicitly request the slice information from the OAM 402 for the network slice instance. It specifies the network slice instance by providing an S-NSSAI and/or NSI.

In 402, the OAM 402 retrieves the slice information from its memory (e.g. database) in 405, and provides the slice information to the NWDAF in 406.

When the NWDAF 117 knows which communication network components (e.g. network functions) are part of the network slice instance, it may obtain information for analysis of the state of the network slice instance from these communication network components, e.g. information about their load (which reflects slice load and can therefore also be seen as slice load information) or serving communication session behaviour e.g. number of accepted communication session and/or packet loss and/or bandwidth consumption by the communication session(s), etc.

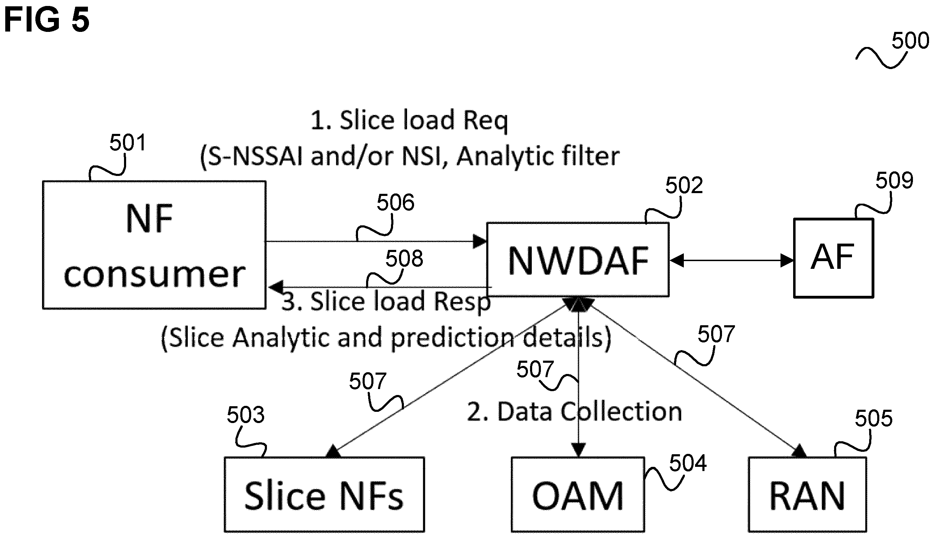

Figure 5 shows a message flow diagram 500 for obtaining information for analysis of the state of a network slice instance.

In 506, a network analysis and/or prediction information consumer 501 (e.g. a network function) asks for network analysis and/or prediction information of a network slice instance, e.g. means of a slice load request sent to an NWDAF 502 (e.g. corresponding to NWDAF 117).

To respond to the request, the NWDAF 502 obtains information for analysis of the state of a network slice instance, e.g. the slice load. For this, the NWDAF 502 in 507 collects data (containing information for analysis of the state of the network slice instance) from different NFs 503, OAM 504 and RAN components 505.

The NWDAF 502 may collects data of the network functions 503 from other network functions e.g. an NRF or, for directly collecting the data, the respective network functions like AMF, SMF, UPF, UDM, AUSF, etc.

For RAN slice data collection, the NWDAF 502 may collect the data from the OAM (e.g. MDAS) 504 or directly from RAN components 505. This may include collecting data from multiple RAN nodes (e.g. base stations) to determine the overall slice information. It should be noted that for a network slice instance, one or more RAN nodes may be associated with the network slice instance. In this case, the NWDAF may collect the data from multiple individual RAN nodes. Alternatively, the OAM 504 can aggregate the data and provide it to the NWDAF. Similarly, an NRF can aggregate data (of multiple network functions). In addition, OAM 504 can also provide the NF consumption information as described in Table. 1.

The NWDAF 502 may collect data the application (which may or may not be associated to the network slice instance) related data from an application function (AF) 509 directly or via the Slice NF 503 e.g. Network Exposure Function (NEF).

Using the obtained information for analysis of the state of a network slice instance performs analytics and makes predictions (e.g. using one or more analysis or prediction models) and provides the results in response to the request to the consumer 501 in 508.

The consumer 501 may provide an analytic filter in the request specifying the type of network analysis and/or prediction information it wants to obtain from the NWDAF 502. The analytic filter can e.g. specify slice load (e.g. number of UEs, number of PDU sessions, CPU consumption, etc.), Slice QoE, number of packet loss, slice bandwidth consumption, etc. as the type or types of network analysis and/or prediction information requested. The NWDAF 502 provides the network analysis and/or prediction information the consumer 501 wants to obtain in response to the request in 508.

Table 4 gives examples for information for analysis of the state of a network slice instance and the sources from which the NWDAF 502 may obtain them. It should be noted that table 4 does not given exhaustive list. Moreover, NWDAF 502 can vary the data collection based on the analytic filter specified by the consumer 501.

**Table 4**

| Information | Source | Description |
|---|---|---|
| Slice NF(s) load | NRF | The load of NF instance(s) in their NF profile. |
| Slice NF(s) status | NRF | The status of NF instance(s) (registered, suspended, undiscoverable). |
| Slice NF(s) resource usage | OAM | The usage of assigned virtual resources currently in use for specific NF instance(s) (mean usage of virtual CPU, memory, disk). |
| Slice NF(s) resource configuration | OAM | The life cycle changes of specific NF resources (e.g., NF operational or interrupted during virtual/physical resources reconfiguration). |
| RAN(s) slice load and resources | OAM or MDAS or RAN | The load of a RAN node and consumption resources associated to the slice. |
| Slice user plane usage (e.g. usage can be per application or per UE or | OAM or MDAS or RAN or UPF or SMF | The user plane usage (e.g. like load, CPU/GPU consumption, DRB resources in RAN, packet losses, |
| overall slice) | | bandwidth consumption, etc.,) |

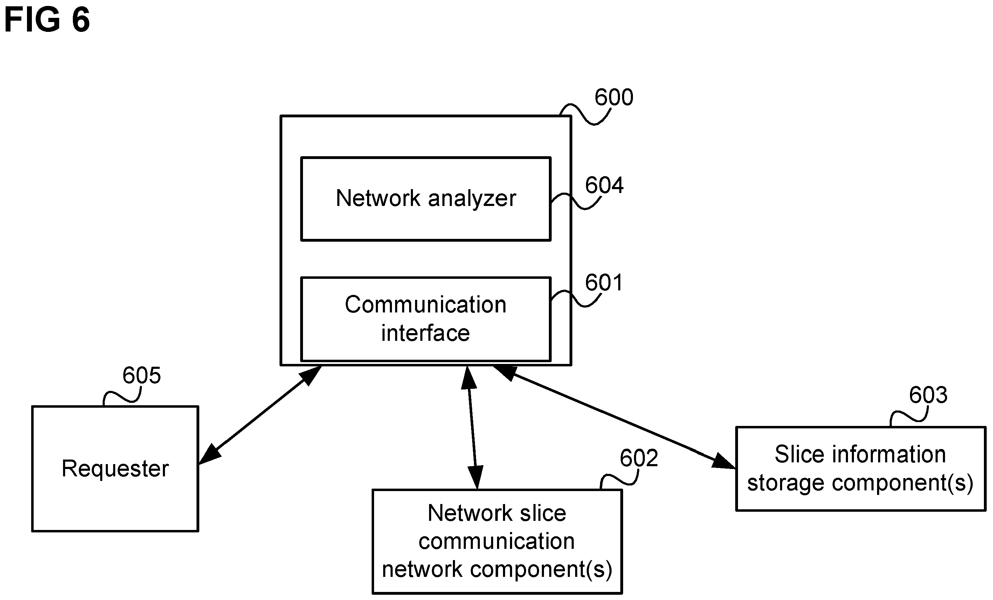

A network analysis component is provided as illustrated in figure 6.

Figure 6 shows a network analysis component 600 of a mobile communication network for providing network analysis and/or prediction information about network slice instances of the mobile communication network.

The network analysis component 600 includes a communication interface 601 configured to obtain, for each of a plurality of network slice instances, information about which communication network components 602 are part of the network slice instance from one or more slice management information storage components 603 of the mobile communication network.

The communication interface 601 is further configured to receive a request (from a requesting entity 605, also referred to as consumer) for network analysis and/or prediction information about a network slice instance of the plurality of network slice instances and to obtain, in reaction to the reception of the request, information for analysis of the state of the network slice instance from at least one of the communication network components 602 which are part of the network slice instance.

The network analysis component 600 further includes a network analyser 604 configured to generate network analysis and/or prediction information about the network slice instance using the obtained information for analysis of the state of the network slice instance.

The communication interface 601 is further configured to provide the generated network analysis and/or prediction information (to the requesting entity 605) in response to the request.

A network analysis component (e.g. an NWDAF) first gathers information about which components are part of which network slice instances and, when an analysis of a particular network slice instance is requested, gathers information for analysis of the state of the network slice instance from the components which are part of the particular network slice instance, i.e. information necessary for the analysis.

The information for analysis of the state of the network slice instance may include user plane information such as packet loss, bandwidth consumption in user plane, RAN user plane characteristics such as number of dedicated radio bearers and their usage etc.

The network slice instance may be the network slice instance of a network slice with a single instance, such that the network slice instance may be identified by an identifier of the network slice itself, e.g. an S-NSSAI. Alternatively, the network slice instance may be an instance of multiple instances of a network slice. In that case, the network slice instance may be identified by an identifier of the network slice instance (among the instances of the network slice) together with an identifier of the network slice, e.g. NSI together with S-NSSAI.

The mobile communication network may (e.g. by a corresponding component, e.g. a network function) perform load balancing using the network analysis and/or prediction information provided by the network analysis component. For example, the mobile communication network may stop assigning mobile terminals to a network slice instance if the network analysis and/or prediction information specifies that the network slice instance is overloaded (or will be overloaded in case more UEs are assigned to it), i.e. cannot fulfil a predetermined Quality of Service (QoS) or slice SLA.

Network analysis and/or prediction information may in particular be understood as information characterising the state of a network slice instance, in particular in terms of load (i.e. characterising the load of the network slice instance) and/or the service quality that the network slice instance can provide.

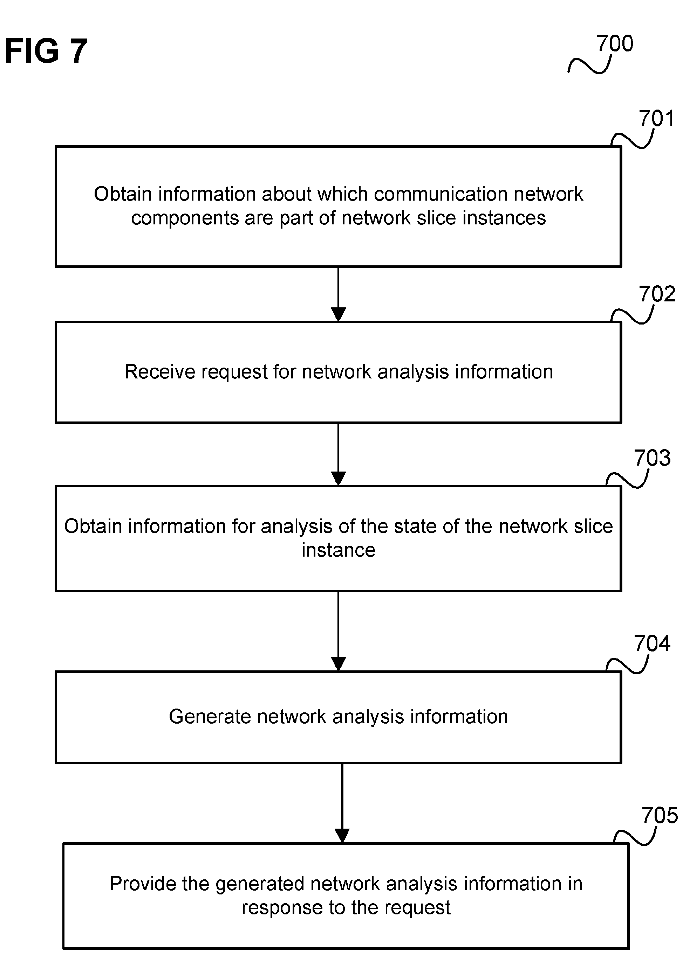

According to an informative example useful for understanding the invention but being not part of the invention, a method is provided as illustrated in figure 7.

Figure 7 shows a flow diagram 700 illustrating a method for providing network analysis and/or prediction information about network slice instances of a mobile communication network.

In 701, for each of a plurality of network slice instances, information about which communication network components are part of the network slice instance is obtained from one or more slice management information storage components of the mobile communication network.

In 702, a request for network analysis and/or prediction information about a network slice instance of the plurality of network slice instances is received.

In 703, information for analysis of the state of the network slice instance is obtained from at least one of the communication network components which are part of the network slice instance in reaction to the reception of the request.

In 704, network analysis and/or prediction information about the network slice instance is generated using the obtained information for analysis of the state of the network slice instance.

In 705, the generated network analysis and/or prediction information is provided in response to the request.

The components of the communication system (in particular the network analysis component and its components, e.g. the communication interface and the network analyser) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit". The network analysis component may be distributed over multiple devices, e.g. multiple server computers.

According to an informative example useful for understanding the invention but being not part of the invention, a network component (or network component arrangement) is provided which include the network analysis component and includes a controller configured to control usage of the network slice instance based on the network analysis and/or prediction information. The controller may be the sender of the request for network analysis and/or prediction information about the network slice instance. For example, the controller may restrict usage of the network slice instance when the network analysis and/or prediction information indicates an overload of the network slice instance.

## Claims

1. A network analysis component (600) of a mobile communication network for providing network analysis and/or prediction information about a plurality of network slice instances of the mobile communication network, each network slice of said plurality of network slice instances comprising communication network components (602),
the network analysis component (600) comprising:
a communication interface (601) configured to
receive a request for network analysis and/or prediction information about a network slice instance of said plurality of network slice instances; wherein the request includes information specifying the network slice instance;
transmit, in reaction to the reception of the request, a slice information request specifying the network slice instance to an Operation, Administration and Maintenance, OAM, entity (402);
obtain information for analysis of the state of the network slice instance provided by the OAM entity (402); and
a network analyser (604) configured to derive network analysis and/or prediction information about said network slice instance using the obtained information for analysis of the state of said network slice instance;
wherein the communication interface (601) is further configured to provide the derived network analysis and/or prediction information in response to the request.

2. The network analysis component (600) of claim 1, wherein the information for analysis of the state of said network slice instance is information about load, status, resource usage, and/or resource configuration.

3. The network analysis component (600) of claim 1 or 2, wherein the mobile communication network comprises a radio access network and a core network and the communication network components (602) of each network slice instance of said plurality of network slice instances comprise a radio access network component and/or a core network component and/or application function.

4. The network analysis component (600) of any one of claims 1 to 3, wherein the communication network components (602) of each network slice instance of said plurality of network slice instances comprise one or more of a base station, a plurality of base stations, an access and mobility management function, a session management function and a user plane function.

5. A method for providing network analysis and/or prediction information about a plurality of network slice instances of a mobile communication network, each network slice of said plurality of network slice instances comprising communication network components (602), the method comprising:
receiving (403) a request for network analysis and/or prediction information about a network slice instance of said plurality of network slice instances, wherein the request includes information specifying the network slice instance;
transmitting (404), in reaction to the reception of the request, a slice information request specifying the network slice instance to an Operation, Administration and Maintenance, OAM, entity;
obtaining (406) information for analysis of the state of the network slice instance provided by the OAM entity;
deriving network analysis and/or prediction information about said network slice instance using the obtained information for analysis of the state of said network slice instance; and
providing the derived network analysis and/or prediction information in response to the request.

6. A computer program and a computer readable medium including instructions, which,
when executed by a computer, make the computer perform the method of claim 5.

## Patentansprüche

1. Eine Netzwerkanalysekomponente (600) eines Mobilkommunikationsnetzes zur Bereitstellung von Netzwerkanalyse- und/oder Vorhersageinformationen über eine Mehrzahl von Netzwerk-Slice-Instanzen des Mobilkommunikationsnetzes, wobei jeder Netzwerk-Slice der genannten Mehrzahl von Netzwerk-Slice-Instanzen Kommunikationsnetzkomponenten (602) aufweist,
wobei die Netzwerkanalysekomponente (600) aufweist:
eine Kommunikationsschnittstelle (601), die konfiguriert ist zum:
Empfangen einer Anfrage nach Netzwerkanalyse- und/oder Vorhersageinformationen über eine Netzwerk-Slice-Instanz der genannten Mehrzahl von Netzwerk-Slice-Instanzen; wobei die Anfrage Informationen enthält, die die Netzwerk-Slice-Instanz spezifizieren;
Übermitteln, als Reaktion auf den Empfang der Anfrage, einer Slice-Informationsanfrage, die die Netzwerk-Slice-Instanz spezifiziert, an eine Betrieb-, Verwaltungs- und Wartungs-Entität, OAM-Entität, (402);
Beschaffen von Informationen zur Analyse des Zustands der Netzwerk-Slice-Instanz bereitgestellt durch die OAM-Entität (402); und
einen Netzwerkanalysator (604), der konfiguriert ist, Netzwerkanalyse- und/oder Vorhersageinformationen über die genannte Netzwerk-Slice-Instanz unter Verwendung der beschafften Informationen zur Analyse des Zustands der genannten Netzwerk-Slice-Instanz abzuleiten;
wobei die Kommunikationsschnittstelle (601) ferner konfiguriert ist, die abgeleiteten Netzwerkanalyse- und/oder Vorhersageinformationen als Antwort auf die Anfrage bereitzustellen.

2. Die Netzwerkanalysekomponente (600) nach Anspruch 1, wobei die Informationen zur Analyse des Zustands der genannten Netzwerk-Slice-Instanz Informationen über Last, Status, Ressourcennutzung und/oder Ressourcenkonfiguration sind.

3. Die Netzwerkanalysekomponente (600) nach Anspruch 1 oder 2, wobei das Mobilkommunikationsnetz ein Funkzugangsnetz und ein Kernnetz aufweist und die Kommunikationsnetzkomponenten (602) jeder Netzwerk-Slice-Instanz der genannten Mehrzahl von Netzwerk-Slice-Instanzen eine Funkzugangsnetzkomponente und/oder eine Kernnetzkomponente und/oder Anwendungsfunktion aufweisen.

4. Die Netzwerkanalysekomponente (600) nach einem der Ansprüche 1 bis 3, wobei die Kommunikationsnetzkomponenten (602) jeder Netzwerk-Slice-Instanz der genannten Mehrzahl von Netzwerk-Slice-Instanzen eine oder mehrere einer Basisstation, einer Mehrzahl von Basisstationen, einer Zugangs- und Mobilitätsverwaltungsfunktion, einer Sitzungsverwaltungsfunktion und einer Benutzerebenen-Funktion aufweisen.

5. Ein Verfahren zur Bereitstellung von Netzwerkanalyse- und/oder Vorhersageinformationen über eine Mehrzahl von Netzwerk-Slice-Instanzen eines Mobilkommunikationsnetzes, wobei jeder Netzwerk-Slice der genannten Mehrzahl von Netzwerk-Slice-Instanzen Kommunikationsnetzkomponenten (602) aufweist, wobei das Verfahren aufweist:
Empfangen (403) einer Anfrage nach Netzwerkanalyse- und/oder Vorhersageinformationen über eine Netzwerk-Slice-Instanz der genannten Mehrzahl von Netzwerk-Slice-Instanzen, wobei die Anfrage Informationen enthält, die die Netzwerk-Slice-Instanz spezifizieren;
Übermitteln (404), als Reaktion auf den Empfang der Anfrage, einer Slice-Informationsanfrage, die die Netzwerk-Slice-Instanz spezifiziert, an eine Betrieb-, Verwaltungs- und Wartungs-Entität, OAM-Entität;
Beschaffen (406) von Informationen zur Analyse des Zustands der Netzwerk-Slice-Instanz bereitgestellt durch die OAM-Entität;
Ableiten von Netzwerkanalyse- und/oder Vorhersageinformationen über die genannte Netzwerk-Slice-Instanz unter Verwendung der beschafften Informationen zur Analyse des Zustands der genannten Netzwerk-Slice-Instanz; und
Bereitstellen der abgeleiteten Netzwerkanalyse- und/oder Vorhersageinformationen als Antwort auf die Anfrage.

6. Ein Computerprogramm und ein computerlesbares Medium mit Anweisungen, die, wenn sie von einem Computer ausgeführt werden, den Computer veranlassen, das Verfahren nach Anspruch 5 durchzuführen.

## Revendications

1. Composant d'analyse de réseau (600) d'un réseau de communication mobile destiné à fournir des informations d'analyse et/ou de prédiction de réseau concernant une pluralité d'instances de tranche de réseau dudit réseau de communication mobile, chaque tranche de réseau de ladite pluralité d'instances de tranche de réseau comprenant des composants de réseau de communication (602),
le composant d'analyse de réseau (600) comprenant :
une interface de communication (601) configurée pour
recevoir une demande d'informations d'analyse et/ou de prédiction de réseau concernant une instance de tranche de réseau de ladite pluralité d'instances de tranche de réseau ; dans lequel la demande comprend des informations spécifiant l'instance de tranche de réseau ;
transmettre, en réponse à la réception de la demande, une demande d'informations de tranche spécifiant l'instance de tranche de réseau à une entité d'exploitation, d'administration et de maintenance, OAM, (402) ;
obtenir une information pour l'analyse de l'état de l'instance de tranche de réseau fournie par l'entité OAM (402) ; et
un analyseur de réseau (604) configuré pour dériver des informations d'analyse et/ou de prédiction de réseau concernant ladite instance de tranche de réseau en utilisant les informations obtenues pour l'analyse de l'état de ladite instance de tranche de réseau ;
dans lequel l'interface de communication (601) est en outre configurée pour fournir les informations d'analyse et/ou de prédiction de réseau dérivées en réponse à la demande.

2. Composant d'analyse de réseau (600) selon la revendication 1, dans lequel les informations pour l'analyse de l'état de ladite instance de tranche de réseau sont des informations concernant la charge, l'état, l'utilisation des ressources et/ou la configuration des ressources.

3. Composant d'analyse de réseau (600) selon la revendication 1 ou 2, dans lequel le réseau de communication mobile comprend un réseau d'accès radio et un réseau de cœur, et les composants de réseau de communication (602) de chaque instance de tranche de réseau de ladite pluralité d'instances de tranche de réseau comprennent un composant de réseau d'accès radio et/ou un composant de réseau de cœur et/ou une fonction d'application.

4. Composant d'analyse de réseau (600) selon l'une des revendications 1 à 3, dans lequel les composants de réseau de communication (602) de chaque instance de tranche de réseau de ladite pluralité d'instances de tranche de réseau comprennent un ou plusieurs parmi une station de base, une pluralité de stations de base, une fonction de gestion d'accès et de mobilité, une fonction de gestion de session et une fonction de plan utilisateur.

5. Procédé pour fournir des informations d'analyse et/ou de prédiction de réseau concernant une pluralité d'instances de tranche de réseau d'un réseau de communication mobile, chaque tranche de réseau de ladite pluralité d'instances de tranche de réseau comprenant des composants de réseau de communication (602), le procédé comprenant :
la réception (403) d'une demande d'informations d'analyse et/ou de prédiction de réseau concernant une instance de tranche de réseau de ladite pluralité de tranches de réseau, la demande comprenant des informations spécifiant l'instance de tranche de réseau ;
la transmission (404), en réponse à la réception de la demande, d'une demande d'informations de tranche spécifiant l'instance de tranche de réseau à une entité d'exploitation, d'administration et de maintenance (OAM) ;
l'obtention (406) d'une information pour l'analyse de l'état de l'instance de tranche de réseau fournie par l'entité OAM ;
la dérivation d'informations d'analyse et/ou de prédiction de réseau concernant ladite instance de tranche de réseau en utilisant des informations obtenues pour l'analyse de l'état de ladite instance de tranche de réseau ; et
la fourniture des informations d'analyse et/ou de prédiction de réseau dérivées en réponse à la demande.

6. Programme informatique et support lisible par ordinateur comprenant des instructions qui, lorsqu'elles sont exécutées par un ordinateur, amènent l'ordinateur à mettre en œuvre le procédé selon la revendication 5.
